# EUROPÄISCHE PATENTSCHRIFT

(11) **EP 3 054 767 B1**
(45) Veröffentlichungstag und Bekanntmachung des Hinweises auf die Patenterteilung: **28.11.2018**
(21) Anmeldenummer: 14789978.5
(22) Anmeldetag: 24.07.2014
(51) Int. Cl.: A01K 63/04, B01F 11/00, B01F 3/04, B01F 15/02, A01K 63/00

(54) **BEHÄLTER, DER MIT EINEM FLÜSSIGEN MEDIUM GEFÜLLT IST, UND VERFAHREN ZUM ZUFÜHREN VON GASFÖRMIGEN STOFFEN IN DEN BEHÄLTER**
CONTAINER WHICH IS FILLED WITH A LIQUID MEDIUM AND METHOD FOR FEEDING GASEOUS SUBSTANCES INTO THE CONTAINER
RÉCIPIENT REMPLI D'UN LIQUIDE ET PROCÉDÉ D'AMENÉE DE SUBSTANCES GAZEUSES DANS LE RÉCIPIENT

(30) Priorität: 02.08.2013 DE 102013013004; 22.02.2014 DE 102014002521; 01.04.2014 DE 102014004687
(43) Veröffentlichungstag der Anmeldung: 17.08.2016
(73) Patentinhaber: Schleef, Jochen, 49328 Melle (DE)
(72) Erfinder: SCHLEEF, Antje, 49328 Melle (DE); SCHLEEF, Jochen, 49328 Melle (DE)
(74) Vertreter: Siekmann, Gunnar
(86) Internationale Anmeldenummer: PCT/DE2014/000379
(87) Internationale Veröffentlichungsnummer: WO 2015/014336

(56) Entgegenhaltungen:
- US-A1- 2005 201 202
- US-A1- 2007 091 716
- US-B1- 6 322 056

## Beschreibung

Die Erfindung betrifft einen Behälter, der mit einem flüssigen Medium gefüllt ist, mit einer Vorrichtung zum Zuführen von gasförmigen Stoffen. Weiterhin betrifft die Erfindung ein Verfahren zum Zuführen von gasförmigen Stoffen in den Behälter.

Das Zuführen von gasförmigen Stoffen beispielsweise Luft oder Sauerstoff in einen beispielsweise mit Wasser befüllten Behälter wird beispielsweise in der Aquaristik angewandt, um ein Aquarium mit notwendigem Sauerstoff zu versorgen und das Wasser in Bewegung zu halten. Auch zur Verbesserung der Wasserqualität in einem Gartenteich kann das Zuführen von Luft vorteilhaft sein, da in dem Wasser neben der Versorgung mit Sauerstoff eine leichte Strömung verursacht wird. Des Weiteren wird das Einleiten von Luft bei mit Wasser gefüllten Dekorationselementen eingesetzt, wobei hier der optische Eindruck der aufsteigenden Luftblasen im Vordergrund steht.

Aus der US 3 788 616 A ist eine Vorrichtung zur Belüftung und Bewegung eines Wasservolumens bekannt. Die Vorrichtung weist einen drehbaren in der Flüssigkeit angeordneten Körper und Mittel zum Zuführen von Luft zur unteren Seite des Körpers auf. Durch die Aufnahme von Luft an der jeweiligen unteren Seite des Körpers und dem daraus entstehenden Auftrieb resultiert eine wippende Bewegung des Körpers.

Zudem ist aus der DD 72 186 eine Vorrichtung zum Zuführen von Frischluft in ein Aquarium bekannt, bei der Membranpumpen durch einen Antriebshebel angetrieben werden.

Des Weiteren ist aus der US 6 322 056 B1 eine Vorrichtung mit einem Behälter zum Vermischen einer Flüssigkeit mit einer Luftzuführeinrichtung bekannt. Dabei sind zwei in dem Flüssigkeitsvolumen angeordnete Schalen drehbar an einer Hebelstange oberhalb des Flüssigkeitsbehälters gelagert. Durch aufsteigende Luft wirkt abwechselnd eine Auftriebskraft auf die Schalen, die in einer wippenartigen Bewegung der Schalen resultiert.

Weiterhin ist in der US 2005/201202 A1 eine Vorrichtung entsprechend dem Oberbegriff des Anspruchs 1 zum Mixen eines Fluids in einem Tank offenbart, wobei die Vorrichtung einen an einem Drehpunkt beweglich befestigten Balken aufweist, an dessen Enden Mixplatten befestigt sind, die in die zu mixende Flüssigkeit in dem Tank eintauchen. Durch eine Kippbewegung des Balkens wird das Fluid mittels der Mixplatten vermixt.

Die Zufuhr von gasförmigen Stoffen wird bei diesen Anwendungen zumeist von Pumpen bewerkstelligt. Der Einsatz von Pumpen ist in der Regel vergleichsweise energieaufwändig und weist eine geringe Energieeffizienz auf.

Der Erfindung liegt die Aufgabe zugrunde, eine Vorrichtung vorzuschlagen, mit der ein Zuführen von gasförmigen Stoffen in einen mit einem flüssigen Medium gefüllten Behälter mit nur geringem Energieaufwand möglich ist.

Die Lösung der Aufgabe erfolgt mit einem Behälter mit den Merkmalen des Patentanspruchs 1. Verfahrensmäßig erfolgt die Lösung der Aufgabe mit einem Verfahren mit den Merkmalen des Patentanspruchs 3.

Bei einem Behälter, der mit einem flüssigen Medium gefüllt ist, mit einer Vorrichtung zum Zuführen von gasförmigen Stoffen wobei dem Behälter mindestens zwei Hubeinheiten zugeordnet sind und wobei die Hubeinheiten miteinander über eine Energieübertragungseinrichtung verbunden sind, wobei die Hubeinheiten jeweils mindestens eine Belüftungseinrichtung zur Aufnahme des gasförmigen Stoffes aus der Umgebung des unteren Bereichs des Behälters und mindestens ein höhenverschiebbares Deckenelement aufweisen und der Boden des Behälters Öffnungen zur Überführung der gasförmigen Stoffe in den Behälter aufweist, ist erfindungswesentlich vorgesehen, dass die Hubeinheiten als Hubbehälter ausgebildet sind, dass der Behälter mindestens zwei Öffnungen zur mindestens zeitweisen Aufnahme von mindestens zwei Hubbehältern aufweist, wobei mindestens ein Dichtungselement zwischen dem Rand einer Öffnung und der Wandung eines Hubbehälters angeordnet ist und dass die Öffnungen zur Aufnahme der Hubbehälter im Behälterboden ausgebildet sind. Der Behälter kann beispielsweise mit Wasser gefüllt sein, dem beispielsweise Luft zugeführt werden soll. Über Hubeinheiten, die als Hubbehälter ausgebildet sind, wird die Luft in das Wasservolumen überführt. Dazu kann mindestens eine Hubeinheit ein Luftvolumen aufnehmen, beispielsweise indem eine Belüftungseinrichtung beispielsweise in Form eines Belüftungsventils geöffnet wird. Dabei wird die Luft aus der Umgebung des Bodenbereichs des Behälters, also von außerhalb des Behälters aufgenommen. Der Boden des Behälters weist Öffnungen auf, durch die die Luft in den Behälter überführt werden kann. Die Öffnungen können dabei so ausgestaltet sein, dass sie jeweils einen Hubbehälter aufnehmen können, so dass die Hubbehälter durch die Öffnungen in das Innere des Behälters verfahren werden können und somit ein Luftvolumen in den Behälter überführt wird. Alternativ können die Öffnungen auch als Belüftungsventile ausgestaltet sein, durch die die Luft in das Innere einer Hubeinheit gelangt, die sich bereits im Inneren des Behälters befindet. Die Hubeinheiten sind untereinander beispielsweise über ein Gestänge verbunden. Somit kann ein Aufwärtshub einer Hubeinheit, beispielsweise den Abwärtshub einer zweiten Hubeinheit unterstützen. Die Hubeinheiten sind im unteren Bereich des Behälters angeordnet, so dass die Luft dem Flüssigkeitsvolumen in dem Behälter von unten zugeführt werden kann.

Der Behälter weist mindestens zwei Öffnungen zur mindestens zeitweisen Aufnahme von mindestens zwei Hubbehältern auf, wobei mindestens ein Dichtungselement zwischen dem Rand einer Öffnung und der Wandung eines Hubbehälters angeordnet ist und die Öffnungen zur Aufnahme der Hubbehälter im Behälterboden ausgebildet sind. Insbesondere sind dem Behälter mindestens zwei Hubbehälter zugeordnet und der Behälter weist mindestens zwei Öffnungen zur mindestens zeitweisen Aufnahme der Hubbehälter auf, wobei mindestens ein Dichtungselement zwischen dem Rand einer Öffnung und der Wandung eines Hubbehälters angeordnet ist, sind die Hubbehälter miteinander über eine an einem Drehpunkt drehbar gelagerten Hebelstange drehbar verbunden, die Hubbehälter weisen mindestens eine Belüftungseinrichtung und mindestens ein höhenverschiebbares Deckenelement auf und die Öffnungen zur Aufnahme der Hubbehälter sind im Behälterboden ausgebildet.

Der Behälter kann beispielsweise mit Wasser gefüllt sein, dem beispielsweise Luft zugeführt werden soll. Die Hubeinheiten bestehen in dieser Ausführungsform im Wesentlichen aus vorzugsweise zylinderförmigen Hubbehältern und den höhenverschiebbaren Deckenelementen. Die zuzuführende Luft wird von den Hubbehältern transportiert, die dazu vorzugsweise unterhalb des Behälters angeordnet sind. Die Hubbehälter stehen so im Kontakt zum Behälter, dass der Inhalt der Hubbehälter in den Behälter überführbar ist und anders herum. Dazu weist der Behälter in seinem Boden Öffnungen zur Aufnahme der Hubbehälter auf, durch die hindurch die Hubbehälter verfahren werden können. Zwischen den Rändern der Öffnungen und den Wandungen der Hubbehälter sind Dichtungselemente angeordnet, um ein Austreten der im Behälter befindlichen Flüssigkeit zu verhindern. Diese Dichtungen können beispielsweise als Runddichtungen in Form von O-Ringen ausgeführt sein. Die Hubbehälter beschreiben einen Hubweg senkrecht zum Boden des Behälters, bei dem sich die Hubbehälter in ihrer höchsten Position fast vollständig im Behälter befinden und in ihrer niedrigsten Position fast vollständig außerhalb des Behälters befinden.

In seiner tiefsten Position unterhalb des Behälters nimmt einer der mit Wasser gefüllten Hubbehälter beispielsweise Luft unter Atmosphärendruck aus der Umgebung durch eine Belüftungseinrichtung auf. Die durch die Belüftungseinrichtung, beispielsweise ein Belüftungsventil, einströmende Luft bildet ein Luftpolster im oberen Bereich des Hubbehälters. Nach Aufnahme des Luftvolumens beschreibt der Hubbehälter einen Aufwärtshub. Das Luftpolster in dem Hubbehälter ist somit in den mit Wasser gefüllten Behälter eingebracht und das Luftvolumen kann dort austreten. Durch das Entweichen des Luftvolumens senkt sich das höhenverschiebbare Deckenelement des Hubbehälters ab. Das Deckenelement weist dazu eine höhere durchschnittliche Dichte als das ihn umgebende Medium auf. Parallel zu dem Entweichen des Luftpolsters aus dem ersten Hubbehälter senkt sich der zweite Hubbehälter weiter ab. Bei dem Abwärtshub dieses Hubbehälters wird das höhenverschiebbare Deckenelement in seine ursprüngliche Position angehoben und wird dort arretiert.

Des Weiteren ist es möglich, dass mit einem Gas oder einem Gasgemisch gefüllte Körper wie beispielsweise Bälle oder Ballons von den Hubbehältern aufgenommen und wieder abgegeben werden. Die durchschnittliche Dichte der Körper ist dabei geringer, als die durchschnittliche Dichte des flüssigen Mediums in dem Behälter. Vorzugsweise kommt ein Gas mit einer geringen Dichte zur Verwendung, um die höhere Dichte der das Gas umgebenden Hülle des Körpers auszugleichen.

Die Energieeinsparung bei dem Zuführen eines Gases in einen mit Flüssigkeit gefüllten Behälter wird durch die Verwendung eines Zweihubbehältersystems erreicht. Beide Hubbehälter sind dabei über eine Hebelstange miteinander verbunden. Die Hebelstange ist dabei mittig drehbar an einem Drehpunkt beispielsweise an einer Achse gelagert. Die beiden Hubbehälter bilden also eine Art Wippe. Wenn der eine Hubbehälter aufgrund der auf ihn wirkenden Schwerkraft eine Abwärtsbewegung beschreibt, so erfährt der andere Hubbehälter durch die Kraftübertragung beispielsweise über die Hebelstange einen Aufwärtshub. Die Aufwärtsbewegung eines Hubbehälters wird also durch die Abwärtsbewegung eines zweiten Hubbehälters unterstützt. Durch diese Anordnung der Hubbehälter und deren miteinander gekoppelten Hubbewegungen ist ein gleichbleibender Wasserspiegel in dem Behälter sichergestellt. Das dem Behälter zusätzlich von einem Hubbehälter zugeführte Volumen wird im gleichen Maße von einem anderen Behälter wieder abgeführt. Das eingebrachte Luftvolumen muss also nicht gegen den Druck der Wassersäule im Behälter in diesen eingepresst werden. Dies hat eine erhebliche Reduzierung der zur Luftzuführung benötigten Energie zur Folge.

In einer bevorzugten Ausführung der Erfindung weist der Hubbehälter mindestens ein Ausdehnungselement auf. Bei der Aufnahme eines Luftvolumens in einen Hubbehälter unterhalb des Behälterbodens durch beispielsweise ein Belüftungsventil der Belüftungseinrichtung kann, aufgrund der Ausdehnung der im unteren Bereich der Hubbehälter angeordneten Ausdehnungselemente, der Wasserspiegel in den Hubbehältern bei Öffnung des Belüftungsventils absinken. Die Ausdehnung der Ausdehnungselemente hat eine Verbreiterung des Querschnitts eines Hubbehälters zur Folge. Nach Herstellung eines Gleichgewichtes in einem Hubbehälter, also nach Erreichen der maximalen Ausdehnung der Ausdehnungselemente durch den Druck des im Hubbehälter enthaltenen Wassers, schließt das Belüftungsventil und der Hubbehälter beschreibt einen Aufwärtshub. Durch die Ausdehnungselemente ist zudem sichergestellt, dass sich in beiden Hubbehältern zu jedem Zeitpunkt die gleichen Flüssigkeitsvolumina befinden. Dies unterstützt die energieeffiziente, gekoppelte Wippenbewegung der beiden Hubbehälter.

In einer bevorzugten Ausführung der Erfindung ist unterhalb des Behälterbodens mindestens ein Angleichelement angeordnet, wobei das Angleichelement bei dem Abwärtshub eines Hubbehälters im Kontakt zur Außenwand des Hubbehälters steht. Zum Anheben des Deckenelements eines Hubbehälters und zum Anheben des Flüssigkeitsspiegels in dem Hubbehälter werden die durch den Wasserdruck ausgedehnten Ausdehnungselemente wieder an die Wandungen des Hubbehälters angeglichen. Hierzu sind Angleichelemente unterhalb des Behälterbodens angeordnet, die bei der Abwärtsbewegung eines Hubbehälters die Ausdehnungselemente in Richtung der Hubbehälterwandung zurückdrücken. Die Angleichelemente können beispielsweise als Rollenmechanismus ausgebildet sein, dessen Rollen zumindest abschnittsweise gegen die Außenwand eines Hubbehälters drücken. Der Rollenmechanismus kann beispielsweise an Trägerarmen montiert sein, die unterhalb des Behälterbodens nahe der Öffnung zur Aufnahme der Hubbehälter angeordnet sind. Die Rollen des Rollenmechanismus können dabei so ausgerichtet sein, dass ihre Rollen bei einem Abwärts- und/oder Aufwärtshub des Hubbehälters auf dessen Oberfläche entlangrollen. Auch ein Andrücken der Rollen, beispielsweise über einen Federmechanismus oder eine automatische Steuerung der Angleichelemente, bei der die Trägerarme beispielsweise nur bei der Abwärtsbewegung der Hubbehälter der Wandung angenähert werden, ist möglich.

In einer weiteren bevorzugten Ausbildung der Erfindung weisen die Hubbehälter mindestens eine Entlüftungseinrichtung auf. Die Entlüftungseinrichtung kann beispielsweise als ein Entlüftungsventil ausgebildet sein, das im höhenverstellbaren Deckenelement eines Hubbehälters angeordnet sein kann. Durch Öffnen des Entlüftungsventils kann das im Hubbehälter befindliche Gasvolumen in das Flüssigkeitsvolumen des Behälters strömen und aufsteigen. Ebenfalls ist es möglich, dass vom Hubbehälter aufgenommene, mit einem Gas oder einem Gasgemisch gefüllte Körper durch die Entlüftungseinrichtung abgegeben werden.

In einer Ausführungsform der Erfindung weist der Boden des Behälters mindestens eine Öffnung auf, deren Querschnitt in Größe und Form an den Querschnitt mindestens eines Hubbehälters angepasst ist. Durch die Anpassung der Form und der Größe der Öffnungen im Boden des Behälters ist eine optimale Aufnahme der Hubbehälter gegeben.

In einer vorteilhaften Ausbildung der Erfindung ist der Hebelstange ein Antriebselement zur Unterstützung der Bewegung der Hubbehälter zugeordnet. Zur Aufrechterhaltung der Wippbewegung der Hebelstange und der beiden Hubbehälter ist eine Kompensation der Reibungskräfte und sonstiger der Bewegung entgegenwirkender Kräfte notwendig. Diese Kompensation kann durch ein zusätzliches Antriebselement, das beispielsweise am Drehpunkt der Hebelstange angeordnet sein kann, erreicht werden. Als Antriebselement kann beispielsweise ein Elektromotor oder auch ein Hydraulikantrieb oder ähnliches dienen.

In einer Ausführungsform der Erfindung ist mindestens ein Ausdehnungselement mindestens abschnittsweise aus einem dehnfähigen Material ausgebildet. Das dehnfähige Material kann beispielsweise Gummi oder ein gummiartiges Material sein. Die Ausdehnungselemente können dabei beispielsweise aus dem dehnfähigen Material hergestellte Abschnitte in der Wandung eines Hubbehälters sein. Vorzugsweise sind die Ausdehnungselemente im unteren Bereich der Hubbehälter angeordnet. Bei Öffnung einer oberhalb des Ausdehnungselementes angeordneten Belüftungseinrichtung sinkt der Flüssigkeitsspiegel in dem Hubbehälter ab und die aus dehnbarem Material bestehenden Abschnitte der Hubbehälterwandung werden ausgedehnt. Ebenfalls möglich ist, dass ein Ausdehnungselement klappenartig ausgebildet ist. Dabei kann beispielsweise ein rechteckiger Abschnitt der Gehäusewandung nur an seinem unteren Ende klappbar mit der Gehäusewandung verbunden sein. Die Oberkante und die Seitenkanten des Abschnitts können mit einem flächigen, aus dehnfähigem Material hergestelltem Bauteil verbunden sein, das wiederum mit der Wandung des Hubbehälters verbunden ist. Durch das Öffnen der Belüftungseinrichtung drückt der Wasserdruck die obere Kante der Klappe nach außen und das Volumen des Hubbehälters wird durch die Ausdehnung des dehnbar ausgebildeten Bauteils vergrößert.

In einer bevorzugten Ausführung der Erfindung ist mindestens einem Hubbehälter ein zusätzlicher Deckel zugeordnet, der die Ränder einer Öffnungsfläche des Hubbehälters überragt. Der zusätzliche Deckel ist im Behälter so angeordnet, dass die Öffnung im Boden des Behälters während des Angleichens der Ausdehnungselemente, also während des Abwärtshubs eines Hubbehälters, durch den zusätzlichen Deckel überdeckt ist. Somit lastet der Druck der sich im Behälter befindlichen Wassersäule nicht auf dem Deckenelement des Hubbehälters, sondern auf dem zusätzlichen Deckel. Das Anheben des Deckenelements des Hubbehälters während des Angleichens der Ausdehnungselemente ist somit unter geringerem Energieaufwand möglich, da der Wasserdruck nicht auf dem Deckenelement lastet. Das Deckenelement weist eine höhere durchschnittliche Dichte als das ihn umgebende Medium auf. Des Weiteren können beide Hubbehälter über einen zusätzlichen Deckel verfügen und diese zusätzlichen Deckel können untereinander durch eine Schlauchleitung verbunden sein. Diese Schlauchleitung trägt, neben dem synchronen Anheben und Absenken der Hubbehälter, dazu bei, dass in dem Behälter gleiche Druckverhältnisse vorherrschen.

In einer Ausführung der Erfindung weist der Behälter mindestens eine parallel zum Hubweg eines Hubbehälters verlaufende Führungsstangen auf. Mindestens ein einem Hubbehälter zugeordneter zusätzlicher Deckel weist mindestens ein Führungselement auf, das im gleitenden Kontakt zu den Führungsstangen steht. Die Führungsstangen sind vorzugsweise am Boden innerhalb des Behälters seitlich neben den Öffnungen für die Hubbehälter befestigt. Entlang dieser Führungsstangen können die den Hubbehältern zugeordneten zusätzlichen Deckel verfahren und arretiert werden. Dazu können die zusätzlichen Deckel Führungselemente aufweisen, die einen gleitenden Kontakt zu den Führungsstangen herstellen. Diese Führungselemente können beispielsweise Öffnungen in dem zusätzlichen Deckel sein, in die die Führungsstangen eingefügt werden. Auch andere gleitende Verbindungen, wie beispielsweise Nut-Feder-Verbindungen oder ähnliche sind denkbar.

In einer bevorzugten Ausführung der Erfindung ist mindestens ein Hubbehälter um eine senkrecht zur Öffnung verlaufende Achse drehbar. Die Ausdehnungselemente eines Hubbehälters befinden sich vorzugsweise an zwei einander gegenüberliegenden Seiten der seitlichen Wandung des Hubbehälters. Vorzugsweise sind auch die Angleichelemente an zwei Seiten des Hubbehälters angeordnet. Damit der Hubbehälter mit ausgedehnten Ausdehnungselementen also einen Aufwärtshub ausführen kann, ist beispielsweise eine Drehung des Hubbehälters um seine Achse notwendig, sofern der Aufwärtshub durch die Ausdehnungselemente blockiert ist. Somit kann durch die Drehung ein freier Hubweg bewerkstelligt werden.

In einer Ausführungsform der Erfindung ist mindestens einem Hubbehälter mindestens eine Dreheinrichtung zugeordnet, die mindestens eine die Achse eines Hubbehälters umlaufende Führungsnut aufweist. Weiterhin weist mindestens ein Hubbehälter mindestens einen seitlichen Vorsprung auf, der in mindestens eine Führungsnut fasst. Die Hubbehälter weisen beispielsweise seitliche Vorsprünge auf, die beispielsweise unterhalb der Ausdehnungselemente angeordnet sind. Die Vorsprünge können in eine Führungsnut fassen, die um die Drehachse des Hubbehälters herum angeordnet ist. Eine Aufwärts- bzw. Abwärtsbewegung des Hubbehälters führt somit auch zu einer Drehung des Hubbehälters. Die Führungsnut kann dabei beispielsweise an der Innenwand einer röhrenförmigen Dreheinrichtung angeordnet sein, die um den Hubbehälter herum angeordnet ist.

In einer alternativen Ausführung weist der Behälter in seinem Behälterboden mindestens zwei zylinderförmige Erhebungen auf, die zylinderförmigen Erhebungen weisen jeweils mindestens eine Öffnung zur zumindest abschnittsweisen Aufnahme jeweils einer Hubstange auf, die höhenverschiebbaren Deckenelemente sind als die zylinderförmigen Erhebungen zumindest abschnittsweise umgebende Abdeckelemente ausgebildet, die Abdeckelemente weisen jeweils eine Verbindung zu mindestens einer Hubstange auf und die Hubstangen weisen zumindest zeitweise eine energieübertragende Verbindung zu einer Energieübertragungseinrichtung auf. Die Erhebungen im Behälterboden können in den Behälterboden eingeformt sein oder auch als zusätzliche Elemente mit diesem fest verbunden, beispielsweise verschweißt, sein. Vorzugsweise weisen die zylinderförmigen Erhebungen einen kreisrunden Querschnitt auf. Die Hubeinheiten weisen Abdeckelemente auf, die jeweils den Erhebungen zugeordnet sind. Die Abdeckelemente können wie Deckel über die zylinderförmigen Erhebungen gestülpt sein. Die Außenwandungen der Erhebungen und die Innenwandungen der Abdeckelemente sind gegeneinander, beispielsweise mit einer Runddichtung abgedichtet. Die Erhebungen weisen, vorzugsweise mittig, also im Mittelpunkt des kreisrunden Querschnitts, eine Öffnung zur Durchführung einer Hubstange auf. Diese Hubstange ist mit dem jeweiligen Abdeckelement verbunden. Eine Hubeinheit besteht aus einer Erhebung, der ihr zugeordneten Hubstange und dem mit der Hubstange verbundenen Abdeckelement. Eine Aufwärtsbewegung der Hubstange führt somit zu einem Anheben des Deckels, so dass ein Hohlraum zwischen der zylinderförmigen Erhebung und dem Abdeckelement entsteht. Die Erhebungen weisen jeweils mindestens eine Öffnung in Form einer Belüftungseinrichtung, beispielsweise ein Belüftungsventil auf. Bei einem Aufwärtshub des Abdeckelementes kann dieses Belüftungsventil geöffnet werden, so dass sich der entstehende Hohlraum zwischen Abdeckelement und der Erhebung mit Luft aus der Umgebung unterhalb des Behälters füllen kann. Zur Abgabe des Luftvolumens in den Behälter kann das Abdeckelement mindestens ein Entlüftungsventil aufweisen. Bei einer Abwärtsbewegung des Abdeckelementes wird das zwischen Abdeckelement und Erhebung entstandene Volumen verkleinert, so dass die enthaltene Luft durch die Entlüftungsventile in das Behältervolumen abgegeben wird. Die Hubeinheiten sind miteinander über eine Energieübertragungseinrichtung verbunden. Ein Abwärtshub der einen Hubeinheit kann somit einen Aufwärtshub einer zweiten Hubeinheit bewirken.

In einer bevorzugten Ausführung ist die Energieübertragungseinrichtung als eine Kurbelwelle ausgebildet. Die Kurbelwelle weist jeweils Verbindungen zu den Hubstangen auf, die mit den Abdeckelementen verbunden sind. Vorzugsweise sind hierbei die Hubstangen mit den Hubzapfen der Kurbelwelle verbunden. Eine Rotation der Kurbelwelle bewirkt somit einen Aufwärtshub bzw. einen Abwärtshub der mit ihr verbundenen Abdeckelemente. Durch die Verwendung einer Kurbelwelle ist es möglich, eine Vielzahl an Hubeinheiten über diese zu betreiben. Angetrieben werden kann die Kurbelwelle beispielsweise über einen Elektromotor oder einen ähnlichen Antrieb. Des Weiteren sind die Aufwärtshubbewegungen von den Abwärtshubbewegungen und anders herum durch die energieübertragende Verbindung unterstützt, so dass ein besonders energieeffizienter Betrieb ermöglicht ist.

In einer weiteren Ausführungsform ist die Energieübertragungseinrichtung als ein Rollensystem ausgebildet, ist das Rollensystem zwischen zwei flächigen Bauteilen angeordnet, wobei zumindest ein flächiges Bauteil verschwenkbar ausgebildet ist und das verschwenkbare flächige Bauteil zumindest zeitweise abschnittsweise in berührendem Kontakt zu den Hubstangen steht. Das Rollensystem weist vorzugsweise zwei übereinander angeordnete, einzeln gelagerte Rollen auf. Unterhalb des Behälters ist ein flächiges Bauteil angeordnet. Das flächige Bauteil ist, beispielsweise mittig verschwenkbar an einem stabförmigen Bauteil, beispielsweise an einer Welle, gelagert, so dass die Ränder des flächigen Bauteils eine Aufwärtsbewegung und eine Abwärtsbewegung ausführen können. Unterhalb dieses verschwenkbaren flächigen Bauteils ist ein weiteres flächiges, beispielsweise als eine Bodenplatte ausgebildetes Bauteil angeordnet. Diese Bodenplatte kann beispielsweise eine drehbar gelagerte Verbindung zu der Welle aufweisen, so dass die Welle und die Bodenplatte senkrecht zueinander stehen, die Welle gegen die Bodenplatte aber drehbar ist. Zwischen dem schwenkbaren flächigen Bauteil und der Bodenplatte ist das Rollensystem angeordnet, wobei die obere Rolle in beweglichem Kontakt zum schwenkbaren Bauteil steht und die untere Rolle in beweglichem Kontakt zur Bodenplatte steht. Das Rollensystem weist eine Führungseinrichtung, beispielsweise eine mit der Welle verbundene Führungsstange, auf, die dem Rollensystem einen Umlauf um die Welle ermöglicht. Vorzugsweise ist der Abstand zwischen dem Verbindungsbereich der Welle mit der Führungsstange größer, als der Abstand zwischen dem Verbindungsbereich und der Lagerung des schwenkbaren Bauteils an der Welle. Somit wird das schwenkbare Bauteil an dem Punkt, an dem es im Kontakt zur oberen Rolle steht hochgedrückt, während es an der entgegengesetzten Seite heruntergedrückt wird. Vorzugsweise ist das schwenkbare Bauteil so unterhalb des Behälterbodens angeordnet, dass bei Auslenkung des Bauteils nach oben eine sich oberhalb des Bauteils befindliche Hubeinheit eine maximale Auslenkung nach oben erfährt. Dementsprechend wird auf der entgegengesetzten Seite des flächigen Bauteils eine weitere Hubeinheit maximal heruntergelassen. Vorzugsweise ist die Anordnung zwischen dem schwenkbaren Bauteil und den Hubeinheiten so gewählt, dass die Auslenkung einer Hubeinheit nach oben gleichermaßen in der Auslenkung einer weiteren Hubeinheit nach unten resultiert. Das Rollensystem oder auch die Welle kann einen Antrieb oder eine Verbindung zu einer Antriebseinheit aufweisen, der eine Umlaufbewegung des Rollensystems um die Welle ermöglicht. Dieser Antrieb kann beispielsweise als ein Elektromotor oder auch als ein rein mechanischer Antrieb ausgebildet sein. Beispielsweise kann die Welle drehbar gelagert sein und eine Verbindung zu mindestens einer Antriebseinheit aufweisen. Durch die Drehbewegung der Welle und somit durch die Drehbewegung der Führungsstange wird das Rollensystem vorzugsweise auf einer kreisrunden Bahn um die Welle herum geführt. Alternativ ist es auch möglich, dass die Welle nicht drehbar gelagert ist, sondern die Führungsstange drehbar an der Welle gelagert ist und die Bodenplatte eine feste Verbindung zu der Welle aufweist. Beispielsweise kann in dieser Ausführungsform die untere Rolle eine Verbindung zu einer Antriebseinheit aufweisen oder die Führungsstange weist an ihrer Verbindungsstelle zu der Welle eine Verbindung zu einer Antriebseinheit auf.

In einer bevorzugten Ausführung weist mindestens ein Abdeckelement mindestens eine Entlüftungseinrichtung auf. Durch die Entlüftungseinrichtungen kann ein Luftvolumen, das zwischen einem Abdeckelement und einer Erhebung des Behälterbodens eingeschlossen ist, in das Flüssigkeitsvolumen des Behälters entweichen. Vorzugsweise geschieht dies bei einem Abwärtshub des Abdeckelementes.

In einer konstruktiven Weiterbildung weist der Behälter oberhalb der Erhebungen einen Strömungsleitkanal auf. Vorzugsweise ist der Strömungsleitkanal so angeordnet, dass die, aus den Abdeckelementen austretende Luft gegen den Strömungsleitkanal steigt. Durch Öffnungen im Strömungskanal, kann die Luft im Behälter weiter nach oben steigen. Um eine gezielte Leitung des Luftvolumenstroms zu gewährleisten, sind zumindest Abschnitte des Strömungsleitkanals beispielsweise als Strömungsleitelemente ausgebildet. Diese Strömungsleitelemente können beispielsweise aus geformten Blechteilen, Kunststoffteilen oder ähnlichen bestehen. Die strömungsleitenden Abschnitte der Strömungsleitelemente sind dabei vorzugsweise schräg nach oben gerichtete Abschnitte. Des Weiteren kann der Behälter ein Trichtersystem zur gezielten Leitung des aufsteigenden Gasvolumens aufweisen.

In einer bevorzugten Ausbildung weist der Behälter einen rotationssymmetrischen Querschnitt auf und die Erhebungen des Behälterbodens sind rotationssymmetrisch angeordnet. Vorzugsweise weist der Behälter einen kreisrunden Querschnitt auf, an dessen Rand die Erhebungen des Behälterbodens gleichmäßig verteilt angeordnet sind. Die Kurbelwelle, die die Abdeckelemente der Erhebungen bewegt, kann zwischen zwei Erhebungen beispielsweise Kardanwellenverbindungen aufweisen, so dass eine Übertragung der Bewegung entlang der kreisrunden Anordnung der Hubeinheiten gewährleistet ist. Der Antrieb der Kurbelwelle kann durch eine zentrale Antriebseinheit, beispielsweise einen Elektromotor erfolgen. Dieser kann beispielsweise in einer zentral angeordneten Erhebung des Behälterbodens angeordnet sein.

In einer weiteren Ausgestaltung der Erfindung sind die zuzuführenden gasförmigen Stoffe in Hohlräume aufweisende Körper, insbesondere Kugeln, eingeschlossen. Vorzugsweise weisen die Körper eine durchschnittliche Dichte auf, die geringer ist als die Dichte des sie umgebenden Mediums. Die Körper können von den Hubeinheiten aufgenommen werden, von diesen dem Behälter zugeführt werden und in diesem freigegeben werden. Somit können die Körper in dem mit Flüssigkeit gefüllten Behälter aufsteigen. Die aufsteigenden Körper können beispielsweise über ein Trichtersystem oder verschiedene Leitungsvorrichtungen bei ihrem Aufstieg gezielt geleitet werden.

Bei einem Verfahren zum Zuführen von gasförmigen Stoffen in den oben beschriebenen, mit einem flüssigen Medium gefüllten Behälter, wobei der Behälterboden mindestens zwei Öffnungen zur zumindest zeitweisen Aufnahme zweier Hubbehälter aufweist, die mit einer an einem Drehpunkt drehbar gelagerten Hebelstange drehbar verbunden sind und wobei die Hubbehälter mindestens eine Belüftungseinrichtung und mindestens ein höhenverschiebbares Deckenelement aufweisen, ist vorgesehen, dass das zuzuführende Gasvolumen von einem Hubbehälter durch Öffnen einer Belüftungseinrichtung außerhalb des gefüllten Behälters aufgenommen wird, wobei das höhenverschiebbare Deckenelement des Hubbehälters arretiert ist und dass das Gasvolumen durch einen Aufwärtshub des Hubbehälters in den gefüllten Behälter überführt wird, wobei der Deckel des Hubbehälters dearretiert wird und dass das von dem Hubbehälter aufgenommene Gasvolumen in den gefüllten Behälter freigesetzt wird, wobei das höhenverstellbare Deckenelement des Hubbehälters absinkt und dass der Hubbehälter abgesenkt wird, wobei das Deckenelement des Hubbehälters angehoben und arretiert wird und dass der Vorgang wechselseitig von zwei, über eine drehbar gelagerte Hebelstange verbundenen Hubbehältern ausgeführt wird.

Zwei Hubbehälter sind über eine Hebelstange, ähnlich einer Wippe, miteinander verbunden. Befindet sich der eine Hubbehälter in der untersten Position so befindet sich der andere Hubbehälter in der obersten Position. In der untersten Position befindet sich der Hubbehälter außerhalb des mit Flüssigkeit, beispielsweise Wasser, gefüllten Behälters. In dieser Stellung ist das Deckenelement des Hubbehälters in Höhe der Öffnung des Behälterbodens arretiert. Durch das Öffnen der Belüftungseinrichtung wird ein Gas, beispielsweise Luft unter Atmosphärendruck aus der Umgebung in den Hubbehälter aufgenommen. Nach Aufnahme der Luft wird die Belüftungseinrichtung geschlossen und der Hubbehälter erfährt einen Aufwärtshub. Hierdurch wird das Luftvolumen in den mit Wasser gefüllten Behälter überführt. Mit Beginn des Aufwärtshubs wird das Deckenelement des Hubbehälters dearretiert. In dem mit Wasser gefüllten Behälter kann die Luft aus dem Hubbehälter in den Behälter entweichen. Durch das Entweichen der Luft sinkt das Deckenelement des Hubbehälters ab. Nach Entweichen der Luft aus dem Hubbehälter wird dieser abgesenkt. Während des Abwärtshubes des Hubbehälters wird dessen Deckenelement angehoben und somit in seinen ursprünglichen Zustand versetzt. Wenn der Hubbehälter wieder seine niedrigste Position erreicht hat beginnt der Vorgang von neuem. Da die beiden Hubbehälter über eine Hebelstange miteinander verbunden sind, wird der Vorgang wechselseitig von beiden Hubbehältern ausgeführt. Die Aufwärts- und Abwärtsbewegungen der Hubbehälter unterstützen sich somit gegenseitig. Des Weiteren kann das Gas auch in Portionen, beispielsweise in Form von mit Gas gefüllten Körpern wie Kugeln, Ballons oder ähnlichem aufgenommen und wieder abgegeben werden.

In einer vorteilhaften Weiterbildung des Verfahrens wird beim Öffnen der Belüftungseinrichtung mindestens ein in dem Hubbehälter vorhandenes Ausdehnungselement ausgedehnt und das ausgedehnte Ausdehnungselement wird beim Absenken des Hubbehälters in seinen ursprünglichen Zustand gebracht. Beim Öffnen der Belüftungseinrichtung können sich in dem Hubbehälter durch den Druck der Wassersäule Ausdehnungselemente ausdehnen. Oberhalb des Wasserspiegels bildet sich ein Luftpolster. Der Wasserspiegel in dem Hubbehälter sinkt ab. Das Volumen des Hubbehälters wird durch die Ausdehnung der Ausdehnungselemente vergrößert. Nach Abgabe des Luftvolumens in dem mit Wasser gefüllten Behälter werden die ausgedehnten Ausdehnungselemente während des Abwärtshubs in Richtung der Wandungen des Hubbehälters gedrückt. Die Ausdehnungselemente werden also an die Wandungen des Hubbehälters angeglichen.

In einer Weiterbildung des Verfahrens wird das vom Hubbehälter aufgenommene Gasvolumen durch das Öffnen einer in dem Hubbehälter vorhandenen Entlüftungseinrichtung in den mit Flüssigkeit gefüllten Behälter freigesetzt. Nach Aufnahme beispielsweise eines Luftvolumens wird der Hubbehälter in den mit Flüssigkeit gefüllten Behälter verfahren. Hier wird eine Entlüftungseinrichtung, die sich beispielsweise in dem Deckenelement des Hubbehälters befindet, geöffnet. Durch diese Entlüftungseinrichtung kann das Luftvolumen in den Behälter entweichen. Auch die Abgabe von mit einem Gas oder mit einem Gasgemisch gefüllten Körpern durch die Entlüftungseinrichtung kann möglich sein.

Vorteilhafterweise werden die Hubbehälter bei einem Aufwärtshub in eine Richtung gedreht und bei einem Abwärtshub zurückgedreht. Bei einem Abwärtshub werden die ausgedehnten Ausdehnungselemente eines Hubbehälters an die Wandungen des Hubbehälters durch die Rollen eines Angleichelementes das unter dem Boden des Behälters angeordnet ist angeglichen. Damit der Hubbehälter diese Angleichelemente bei einem Aufwärtshub ungehindert passieren kann, wird der Hubbehälter um etwa 90° entlang einer parallel zum Hubweg verlaufenden Achse gedreht. Entsprechend wird der Hubbehälter bei einem Abwärtshub zurückgedreht, damit die Ausdehnungselemente angeglichen werden können.

In einer Weiterbildung des Verfahrens wird ein zusätzlicher, in dem Behälter angeordneter, Deckel mit dem Hubbehälter zusammen verfahren und beim Anheben des Deckenelements des Hubbehälters über dem Hubbehälter arretiert. Bei dem Anheben des Deckenelements eines Hubbehälters beim Abwärtshub des Hubbehälters lastet der Druck der sich im Behälter befindlichen Flüssigkeit auf dem Deckenelement des Hubbehälters. Um das Deckenelement des Hubbehälters vom Druck der Flüssigkeit zu entlasten, wird ein zusätzlicher Deckel oberhalb des Hubbehälters arretiert. Der Druck der Flüssigkeitssäule über dem Hubbehälter lastet somit auf dem zusätzlichen Deckel, wodurch ein Anheben des Deckenelements des Hubbehälters unter geringerem Energieaufwand möglich ist.

Bei einem Verfahren zum Zuführen von gasförmigen Stoffen in einen mit einem flüssigen Medium gefüllten Behälter, wobei der Behälter in seinem Behälterboden mindestens eine Erhebung aufweist, wobei den Erhebungen jeweils mindestens ein Abdeckelement zugeordnet ist, wobei die Abdeckelemente eine Verbindung zu jeweils einer Hubstange aufweisen und wobei die Hubstangen jeweils eine energieübertragende Verbindung zu einer Energieübertragungseinrichtung aufweisen, ist vorgesehen, dass das zuführende Gasvolumen durch Öffnen von Belüftungseinrichtungen der Erhebungen und durch einen Aufwärtshub der zugeordneten Abdeckelemente in den Raum zwischen den Erhebungen und den Abdeckelementen aufgenommen wird, dass das aufgenommene Gasvolumen durch Öffnen mindestens einer Entlüftungseinrichtung der Abdeckelemente in den Behälter abgegeben wird und dass der Vorgang wechselseitig von den über die Energieübertragungseinrichtung verbundenen Abdeckelementen ausgeführt wird. Durch die Rotation der Kurbelwelle werden die Abdeckelemente wechselseitig angehoben und abgesenkt. Beim Anheben eines Abdeckelementes durch die Hubstange, also bei einem Aufwärtshub, werden die Belüftungseinrichtungen der Erhebungen geöffnet. Durch das Anheben des Abdeckelementes entsteht ein Unterdruck in dem Raum zwischen der Erhebung und dem Abdeckelement, der durch das Zuströmen von Luft aus der Umgebung ausgeglichen wird. Der Raum zwischen dem Abdeckelement und der Erhebung hat sein maximales Volumen erreicht, wenn der Aufwärtshub vollständig ausgeführt wurde. Bei Beginn der Abwärtsbewegung werden die Entlüftungsöffnungen in dem entsprechenden Abdeckelement geöffnet. Durch das sich verkleinernde Volumen des Raumes zwischen der Erhebung und dem Abdeckelement wird das sich in dem Raum befindliche Luftvolumen in den Behälter abgegeben. Beim vollständigen Zurückfahren der Hubstange hat der Raum zwischen der Erhebung und dem Abdeckelement sein minimales Volumen erreicht, so dass hier die Belüftungsöffnungen im Abdeckelement wieder geschlossen werden. Durch den Antrieb der Abdeckelemente über Hubstangen, die mit einer Kurbelwelle verbunden sind, sind die Bewegungen der Abdeckelemente gekoppelt. Somit unterstützt ein Abwärtshub eines Abdeckelementes den Aufwärtshub eines anderen Abdeckelementes. Hierdurch ist eine besonders energieeffiziente Steuerung bzw. ein besonders energieeffizienter Antrieb der Luftzuführung in das Flüssigkeitsvolumen des Behälters gegeben.

Nachfolgend wird die Erfindung anhand eines in der Zeichnung dargestellten bevorzugten Ausführungsbeispiels weiter erläutert. Im Einzelnen zeigen die schematischen Darstellungen in:
- Fig. 1:: eine geschnittene schematische Darstellung der erfindungsgemäßen Vorrichtung;
- Fig. 2:: eine geschnittene schematische Ansicht eines Hubbehälters in der untersten Position;
- Fig. 3:: eine geschnittene schematische Ansicht eines Hubbehälters gemäß Fig. 2 im belüfteten Zustand;
- Fig. 4:: eine geschnittene schematische Ansicht eines Hubbehälters gemäß Fig. 2 in oberer Position mit geöffnetem Entlüftungsventil;
- Fig. 5:: eine geschnittene schematische Ansicht eines Hubbehälters gemäß Fig. 2 in der Abwärtsbewegung;
- Fig. 6a:: eine schematische seitliche Projektionsdarstellung einer Dreheinrichtung;
- Fig. 6b:: eine schematische Draufsicht einer Dreheinrichtung gemäß Fig. 6a;
- Fig. 7:: eine schematische Teilansicht einer weiteren Ausführungsform der Erfindung;
- Fig. 8:: eine schematische Teilansicht einer alternativen Ausführungsform;
- Fig. 9:: eine schematische, teilgeschnittene Ansicht des Behälters;
- Fig. 10:: eine schematische, teilgeschnittene Ansicht des Behälters in einer Draufsicht;
- Fig. 11:: eine schematische teilgeschnittene Ansicht eines Rollensystems mit einem flächigen, schwenkbaren Bauteil und einer Bodenplatte; und
- Fig. 12:: eine schematische, teilgeschnittene Ansicht eines Rollensystems.

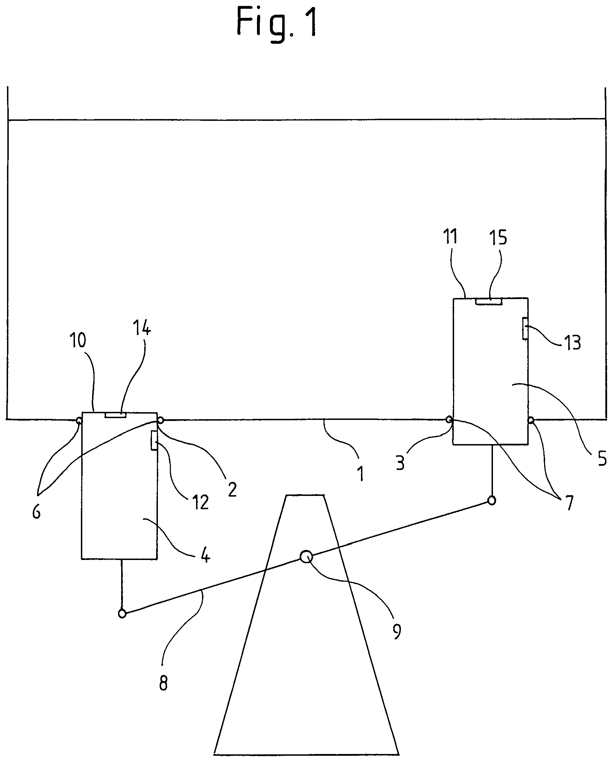

In. Fig. 1 ist in einer schematischen Darstellung eine geschnittene Seitenansicht der erfindungsgemäßen Vorrichtung dargestellt. Es ist Aufgabe der Vorrichtung ein Volumen eines gasförmigen Stoffes in den mit einer Flüssigkeit gefüllten Behälter 1 einzubringen. Dazu weist der Behälter 1 zwei Öffnungen 2, 3 auf, durch die die Hubbehälter 4, 5 in den Behälter 1 eingebracht werden können. Zwischen den Rändern der Öffnungen 2, 3 und den Wandungen der Hubbehälter 4, 5 sind Dichtungen 6, 7 angeordnet. Die Hubbehälter 4, 5 sind untereinander über eine Hebelstange 8 miteinander verbunden. Die Hebelstange 8 ist mittig an einem Drehpunkt 9 drehbar gelagert. An dem Drehpunkt 9 ist ein Antriebselement zur Unterstützung der Bewegung der Hubbehälter 4, 5 angeordnet. Die Hubbehälter 4, 5 weisen höhenverschiebbare Deckenelemente 10, 11 auf, die entlang der Behälterwandungen verschiebbar gelagert sind. Zur Aufnahme des in den Behälter 1 einzubringenden Luftvolumens weisen die Hubbehälter 4, 5 in ihren oberen Bereichen Belüftungsventile wird beispielsweise Luft in einer Stellung des Hubbehälters 4, 5 unterhalb des Behälters 1 aufgenommen. Durch Verfahren der Hubbehälter 4 bzw. 5 wird das Luftvolumen in den Behälter 1 eingebracht und dort über die Entlüftungseinrichtungen 14, 15, die sich in den Deckeln 10, 11 der Hubbehälter 4, 5 befinden, abgelassen. Durch die Verbindung der Behälter 4, 5 über die drehbar gelagerte Hebelstange 8 wird der Vorgang des Luftaufnehmens und Luftablassens der Hubbehälter 4, 5 wechselseitig in einer wippenartigen Bewegung durchgeführt.

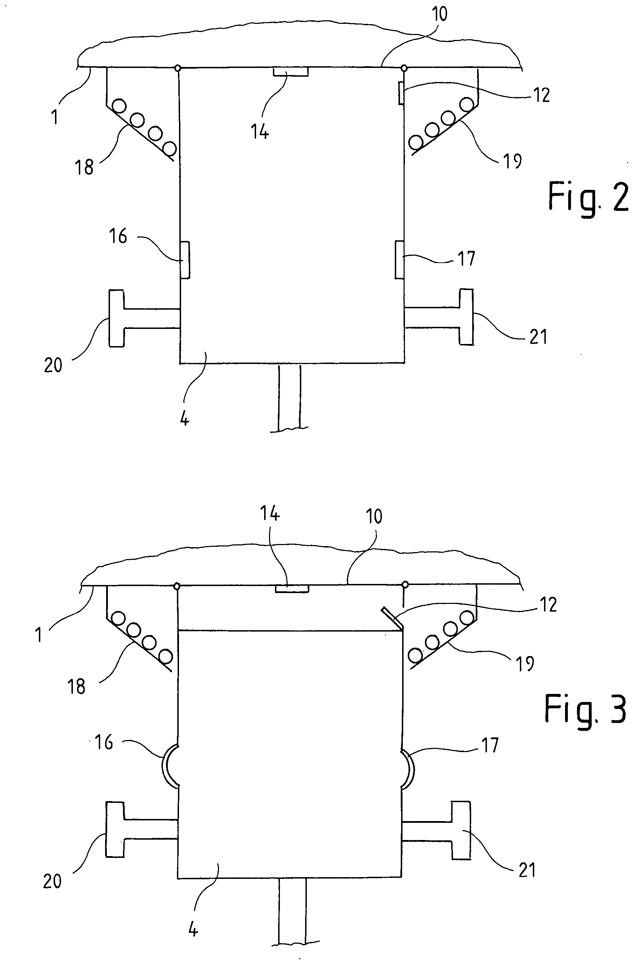

In Fig. 2 ist ein Hubbehälter 4 in seiner untersten Position unterhalb des Behälters 1 in einer schematischen geschnittenen Ansicht dargestellt. In der unteren Hälfte des Hubbehälters 4 sind zwei Ausdehnungselemente 16, 17 angeordnet. Diese sind aus dehnfähigem Material hergestellt, so dass sie sich beim Öffnen des Belüftungsventils 12 ausdehnen können. In der Abwärtsbewegung des Hubbehälters 4 werden die Ausdehnungselemente 16, 17 durch die unterhalb des Behälters 1 angeordneten Angleichelemente 18, 19 in Richtung der Wandungen des Hubbehälters 4 gedrückt. Um ein Verfahren des Hubbehälters 4 mit ausgedehnten Ausdehnungselementen 16, 17 in den Behälter 1 zu ermöglichen, weist der Hubbehälter 4 an seinem unteren Ende Vorsprünge 20, 21 auf, die in die Führungsnut einer Dreheinrichtung fassen können. Die in der Figur nicht dargestellte Dreheinrichtung weist eine um die Achse des Hubbehälters verlaufende Führungsnut auf, so dass beim Aufwärtshub des Hubbehälters die Ausdehnungselemente 16, 17 hinter die Angleichelemente 18, 19 gedreht werden und nach senkrechtem Abwärtshub eine entsprechende Rückwärts- oder weitere Vorwärtsdrehung erfolgt, sobald sich die Ausdehnungselemente 16, 17 unterhalb der Angleichelemente 18, 19 befinden.

In Fig. 3 ist ein Hubbehälter 4 gemäß Fig. 2 mit geöffnetem Belüftungsventil 12 dargestellt. Durch die Öffnung des Belüftungsventils 12 bei arretiertem Deckenelement 10 sinkt der Wasserspiegel ab und die Ausdehnungselemente 16, 17 werden ausgedehnt. Oberhalb des Wasserspiegels bildet sich ein Luftvolumen innerhalb des Hubbehälters 4.

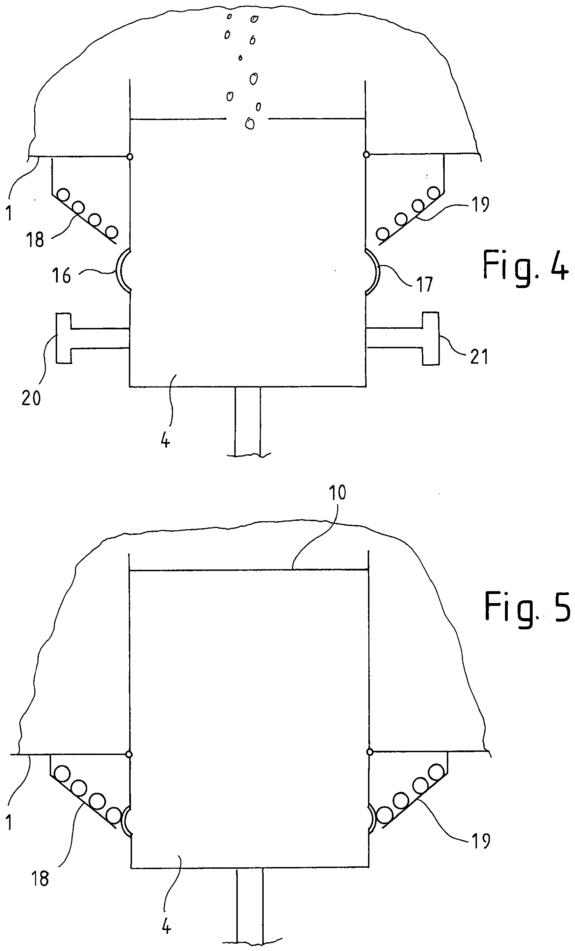

In Fig. 4 ist ein Hubbehälter 4 gemäß Fig. 2 in seiner Aufwärtsbewegung dargestellt. Das Luftvolumen ist in den Behälter 1 eingebracht und kann dort in das Flüssigkeitsvolumen durch das geöffnete Entlüftungsventil 14 entweichen. Das Deckenelement 10 ist dearretiert und sinkt in Richtung des Bodens des Hubbehälters 4 auf das Wasserniveau im Hubbehälter ab.

In Fig. 5 ist der Hubbehälter 4 gemäß Fig. 2 in seiner Abwärtsbewegung dargestellt. Das Luftvolumen ist durch das Entlüftungsventil 14 vollständig in das Flüssigkeitsvolumen des Behälters 1 entwichen. Durch die Abwärtsbewegung des Hubbehälters 4 werden die ausgedehnten Ausdehnungselemente 16, 17 gegen die Angleichelemente 18, 19 gedrückt, wodurch das Deckenelement 10 in seine ursprüngliche Lage gebracht und dort arretiert wird.

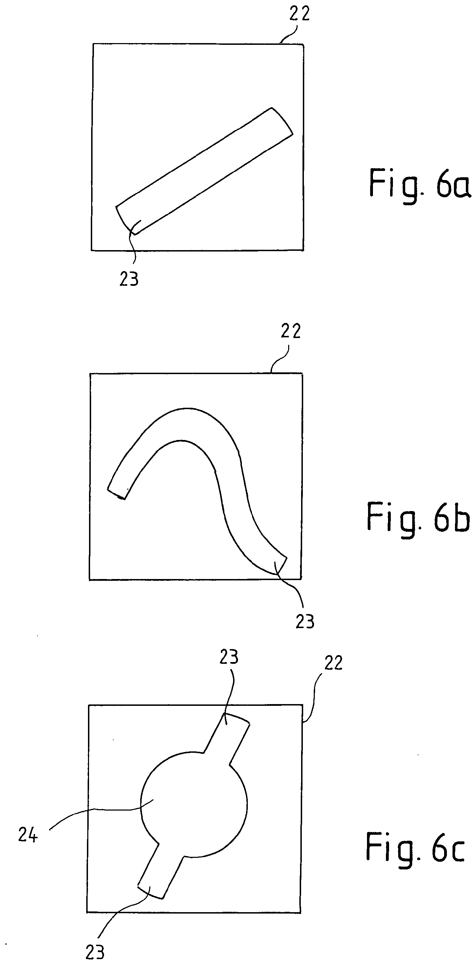

In Fig. 6a ist eine seitliche Projektion einer Dreheinrichtung 22 mit ihrer Führungsnut 23 dargestellt. Durch die schräg nach oben verlaufende Führungsnut 23 ist die Führung eines Hubbehälters 4 über die Vorsprünge 20, 21 entlang des Hubweges angedeutet.

In Fig. 6b ist die Dreheinrichtung 22 gemäß Fig. 6a in einer Draufsicht dargestellt. Neben den Führungsnuten 23 weist die Dreheinrichtung 22 eine Aussparung 24 zur Aufnahme des Hubbehälters 4 auf.

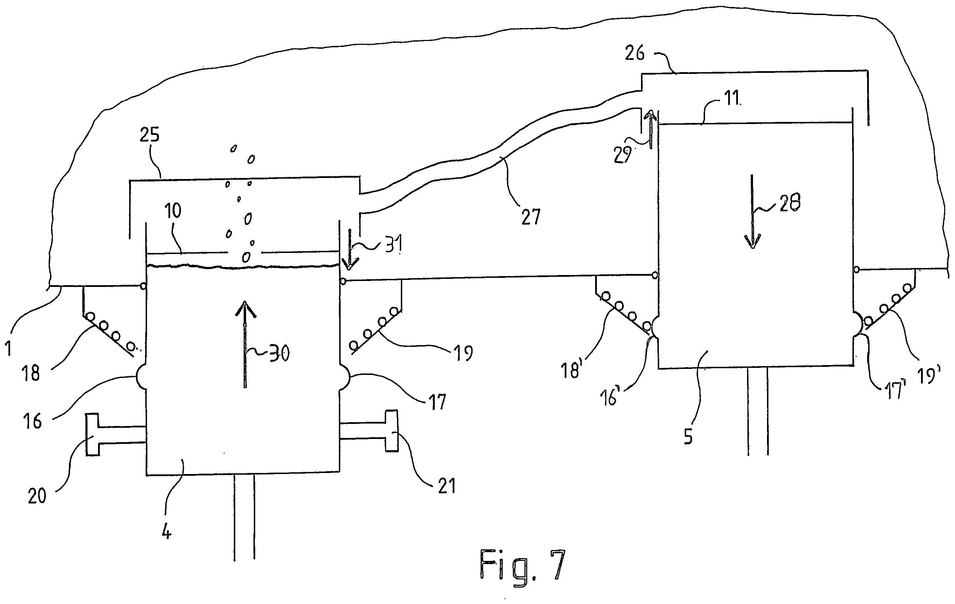

In Abbildung 7 ist ein weiteres Ausführungsbeispiel in einer schematischen Teilansicht dargestellt. In diesem Ausführungsbeispiel weisen die Hubbehälter 4, 5 zusätzliche Deckel 25, 26 auf. Diese zusätzlichen Deckel 25, 26 überragen die Wandungen der Hubbehälter 4, 5 und können über diese gestülpt werden. Beim Angleichen der ausgedehnten Ausdehnungselemente 16', 17' während eines Abwärtshubs des Hubbehälters 5, symbolisiert durch den Pfeil 28, lastet der Druck der im Behälter 1 befindlichen Wassersäule auf dem zusätzlichen Deckel 26 und nicht auf dem Deckenelemente 11 des Hubbehälters 5, so dass das Deckenelement 11 mit geringem Energieaufwand angehoben, symbolisiert durch den Pfeil 29, werden kann. Es muss somit nicht gegen den Druck der Wassersäule gearbeitet werden. Entsprechend ist ein Aufwärtshub des Hubbehälters 4 mit einem Pfeil 30 und ein Absenken des Deckenelements 10 mit einem Pfeil 31 markiert. Die zusätzlichen Deckel 25, 26 sind über eine Schlauchverbindung 27 miteinander verbunden. Diese Schlauchverbindung 27 fungiert als ein Bypass, so dass sichergestellt ist, dass in beiden Hubbehältern gleiche Druckverhältnisse vorherrschen.

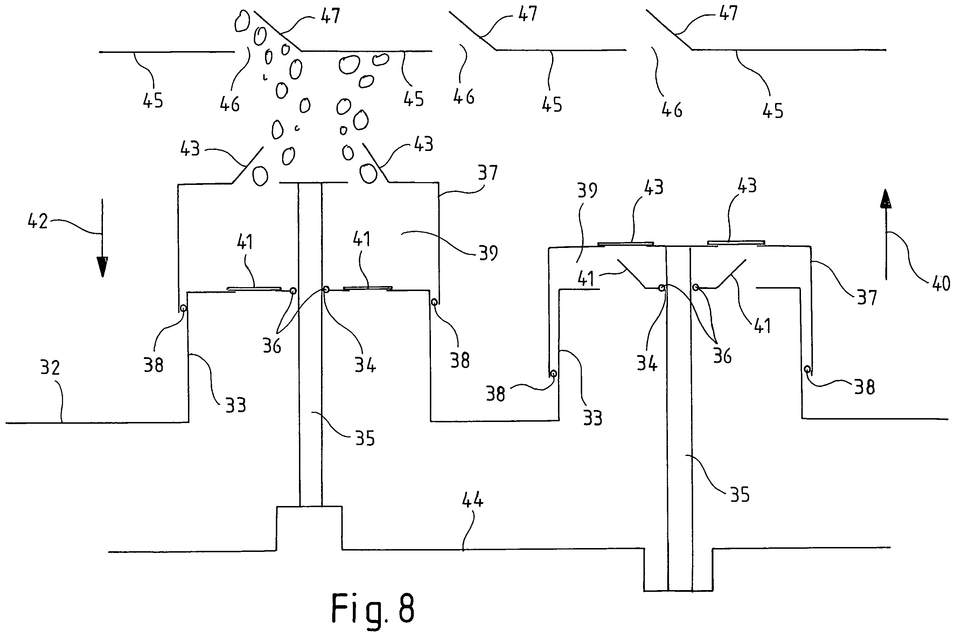

In Abbildung 8 ist ein alternatives Ausführungsbeispiel dargestellt. Der Behälterboden 32 des Behälters 1 weist Erhebungen 33 auf, die jeweils eine Öffnung 34 zur Durchführung einer Hubstange 35 aufweisen. Der obere Teil der Erhebung 33 ist durch eine Dichtung 36, beispielsweise eine Runddichtung, gegen die Hubstange 35 abgedichtet. Über die Erhebungen 33 sind Abdeckelemente 37 gestülpt, die eine Verbindung zu den jeweiligen Hubstangen 35 aufweisen. Die Außenwandungen der Erhebungen 33 sind gegen die Innenwandungen der Abdeckelemente 37 mit einer Dichtung 38, insbesondere einer Runddichtung, abgedichtet. Zur Befüllung der, zwischen dem jeweiligen Abdeckelement 37 und der Erhebung 33 bei einem Aufwärtshub 40 des Abdeckelementes 33, entstehenden Raumvolumens 39 weisen die Erhebungen 33 jeweils eine Öffnung in Form einer Belüftungseinrichtung 41 auf. Diese Belüftungseinrichtungen können beispielsweise als Belüftungsventile ausgeführt sein. Zur Abgabe des Gasvolumens in den Behälter 1 bei einem Abwärtshub 42 weisen die Abdeckelemente 37 Entlüftungseinrichtungen 43, beispielsweise Entlüftungsventile auf. Angetrieben werden die Hubstangen 35, die die Abdeckelemente 37 anheben und absenken, über eine Kurbelwelle 44. Zur Strömungsleitung des in den Behälter 1 abgegebenen Gasvolumens weist der Behälter 1 einen Strömungskanal 45 auf. Dieser Strömungskanal kann Öffnungen 46 mit Strömungsleitelementen 47, die beispielsweise als Strömungsleitbleche ausgebildet sein können, aufweisen.

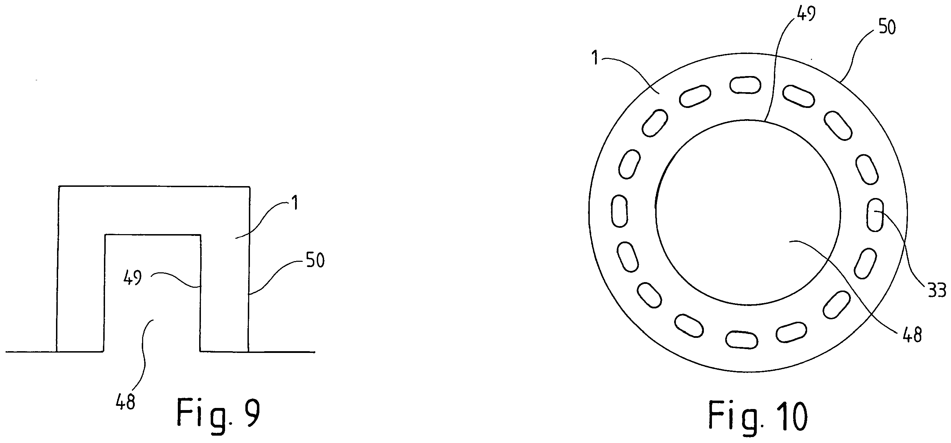

In Fig. 9 ist eine Schnittansicht eines Ausführungsbeispiels des Behälters 1 dargestellt. Der Behälter 1 weist mittig eine zentrale Aussparung 48 auf, in der beispielsweise eine Antriebseinheit für beispielsweise die Kurbelwelle angeordnet sein kann.

In Fig. 10 ist eine teilweise geschnittene Ansicht eines Ausführungsbeispiels des Behälters 1 in einer Draufsicht dargestellt. Der Behälter 1 weist einen kreisrunden Querschnitt auf. Zwischen der der zentralen Aussparung zugewandten Außenwand 49 des Behälters 1 und der nach außen gewandten Außenwand 50 des Behälters 1 sind die Erhebungen 33 mit ihren Abdeckelementen 37 rotationssymmetrisch angeordnet. Zum Antrieb der Abdeckelemente 37 über eine Kurbelwelle 44 kann die Kurbelwelle 44 Kardangelenke zwischen den verschiedenen Erhebungen aufweisen.

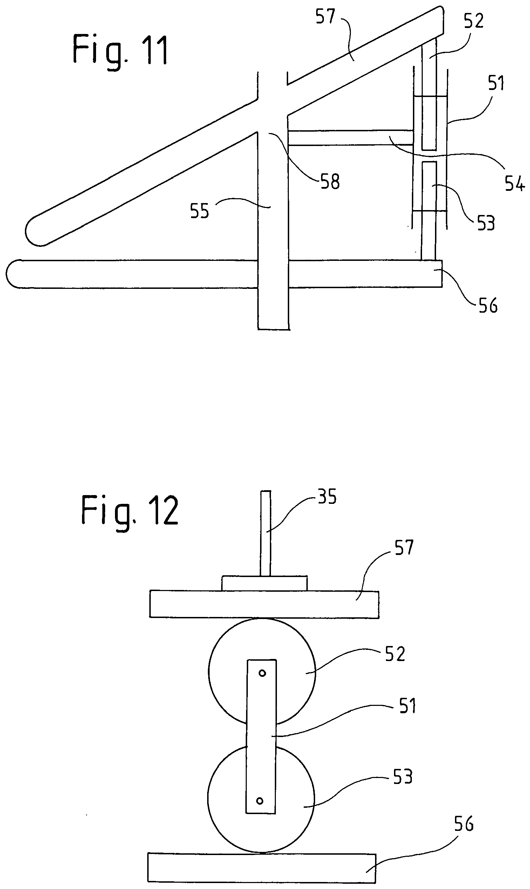

In Fig. 11 ist eine teilweise geschnittene Ansicht eines Rollensystems 51 dargestellt. Das Rollensystem weist eine obere Rolle 52 und eine untere Rolle 53 auf, die unabhängig voneinander gelagert sind. Das Rollensystem ist über eine Führungsstange 54 mit einem, beispielsweise als Welle ausgeführten stabförmigen Bauteil 55 verbunden. Unterhalb des Rollensystems 51 ist ein flächiges Bauteil 56 angeordnet, auf dem die untere Rolle 53 rollen kann. Die Welle 55 und das flächige Bauteil 56 spannen vorzugsweise einen 90º Grad Winkel auf. Oberhalb des Rollensystems 51 ist ein verschwenkbares flächiges Bauteil 57 angeordnet, das so an der Welle 55 gelagert sein kann, dass die Ränder des schwenkbaren Bauteils 57 eine Aufwärts- oder eine Abwärtsbewegung ausführen können. Der Verbindungsbereich 58 zwischen der Führungsstange 54 und der Welle 55 liegt entlang der Welle 55 näher an dem schwenkbaren Bauteil 57 als an dem flächigen Bauteil 56. Die Führungsstange 54 ist so an der Welle 55 gelagert, dass das Rollensystem 51 vorzugsweise eine kreisrunde Umlaufbahn um die Welle 55 beschreibt. An den Bereichen, an denen es zum Kontakt zwischen der oberen Rolle 52 und dem schwenkbaren Bauteil 57 kommt, wird das schwenkbare Bauteil 57 nach oben geschwenkt, während der entgegengesetzte Bereich des Bauteils 57 nach unten geschwenkt wird. Vorzugsweise ist das Rollensystem 51 und das schwenkbare Bauteil 57 so unterhalb des Behälterbodens 32 (siehe Fig. 8) angeordnet, das bei einem nach oben Schwenken des Bauteils 57 ein Abdeckelement 37 angehoben wird, während im entgegengesetzten Bereich des schwenkbaren Bauteils 57 ein Abdeckelement 37 abgesenkt wird. Durch einen Umlauf des Rollensystems 51 um die Welle 55 werden die Abdeckelemente 37 kontinuierlich angehoben und wieder abgesenkt. Zum Antrieb des Rollensystems 51 kann beispielsweise die Welle 55, der Verbindungsbereich 58 oder auch die untere Rolle 53 eine Verbindung zu einer Antriebseinheit aufweisen.

In Fig. 12 ist ein Rollensystem 51 mit einer oberen Rolle 52 und einer unteren Rolle 53 dargestellt. Beide Rollen sind voneinander unabhängig gelagert. Die untere Rolle läuft auf einem als Bodenplatte ausgebildeten flächigen Bauteil 56. Die obere Rolle 52 weist einen beweglichen Kontakt zu dem schwenkbaren Bauteil 57 auf. Durch Verfahren des Rollensystems 51 unter eine, oberhalb des schwenkbaren Bauteils 57 angeordneten Kolbenstange 35 (siehe Fig. 8) erfährt diese einen Aufwärtshub.

## Patentansprüche

1. Behälter, der mit einem flüssigen Medium gefüllt ist, mit einer Vorrichtung zum Zuführen von gasförmigen Stoffen, wobei dem Behälter (1) mindestens zwei Hubeinheiten (4, 5) zugeordnet sind und wobei die Hubeinheiten miteinander über eine Energieübertragungseinrichtung (8, 44) verbunden sind, wobei die Hubeinheiten (4, 5) jeweils mindestens eine Belüftungseinrichtung (12, 13, 41) zur Aufnahme des gasförmigen Stoffes aus der Umgebung des unteren Bereichs des Behälters und mindestens ein höhenverschiebbares Deckenelement (10, 11, 37) aufweisen und der Boden des Behälters (1) Öffnungen zur Überführung des gasförmigen Stoffes in den Behälter (1) aufweist,
**dadurch gekennzeichnet,**
**dass** die Hubeinheiten (4, 5) als Hubbehälter ausgebildet sind,
**dass** der Behälter (1) mindestens zwei Öffnungen (2, 3) zur mindestens zeitweisen Aufnahme von mindestens zwei Hubbehältern (4, 5) aufweist, wobei mindestens ein Dichtungselement (6, 7) zwischen dem Rand einer Öffnung (2, 3) und der Wandung eines Hubbehälters (4, 5) angeordnet ist, und dass die Öffnungen zur Aufnahme der Hubbehälter im Behälterboden ausgebildet sind.

2. Behälter nach Anspruch 1, **dadurch gekennzeichnet, dass** die zuzuführenden gasförmigen Stoffe in Hohlräume aufweisenden Körpern, insbesondere in Kugeln, eingeschlossen sind.

3. Verfahren zum Zuführen von gasförmigen Stoffen in einen mit einem flüssigen Medium gefüllten Behälter nach Anspruch 1, mit mindestens einem mit einem flüssigen Medium befüllten Behälter (1), wobei der Behälterboden mindestens zwei Öffnungen (2, 3) zur zumindest zeitweisen Aufnahme zweier Hubbehälter (4, 5) aufweist, die mit einer an einem Drehpunkt (9) drehbar gelagerten Hebelstange (8) drehbar verbunden sind und wobei die Hubbehälter (4, 5) mindestens eine Belüftungseinrichtung und mindestens ein höhenverschiebbares Deckenelement aufweisen (10, 11),
wobei
a) dass das zuzuführende Gasvolumen von einem Hubbehälter (4, 5) durch Öffnen einer Belüftungseinrichtung (12, 13) außerhalb des gefüllten Behälters (1) aufgenommen wird, wobei das höhenverschiebbare Deckenelement (10, 11) des Hubbehälters (4, 5) arretiert ist
b) dass das Gasvolumen durch einen Aufwärtshub des Hubbehälters (4, 5) in den gefüllten Behälter (1) überführt wird, wobei das höhenverschiebbare Deckenelement (10, 11) des Hubbehälters (4, 5) dearretiert wird
c) dass das vom Hubbehälter (4, 5) aufgenommene Gasvolumen in dem gefüllten Behälter (1) freigesetzt wird, wobei das höhenverstellbare Deckenelement (10, 11) des Hubbehälters (4, 5) absinkt
d) dass der Hubbehälter (4, 5) abgesenkt wird, wobei das höhenverstellbare Deckenelement (10, 11) des Hubbehälters (4, 5) angehoben und arretiert wird
e) dass der Vorgang wechselseitig von zwei über eine drehbar gelagerte Hebelstange (8) verbundene Hubbehälter (4, 5) wechselseitig ausgeführt wird.

## Claims

1. A container filled with a liquid medium, having an apparatus for supplying gaseous substances, wherein at least two lifting units (4, 5) are associated with the container (1) and wherein the lifting units are interconnected via an energy transmission system (8, 44), wherein the lifting units (4, 5) each have at least one aeration device (12, 13, 41) for receiving the gaseous substance from the surroundings of the lower portion of the container and at least one height-adjustable ceiling element (10, 11, 37), and the bottom of the container (1) has openings for transferring the gaseous substance into the container (1),
**characterized in that**
the lifting units (4, 5) are configured as lifting containers, that the container (1) has at least two openings (2, 3) for at least temporarily receiving at least two lifting containers (4, 5), wherein at least one sealing element (6, 7) is arranged between the rim of an opening (2, 3) and the wall of a lifting container (4, 5), and that the openings for receiving the lifting containers are formed in the container bottom.

2. The container according to Claim 1, **characterized in that** the gaseous substances to be supplied are enclosed in bodies having cavities, particularly in spheres.

3. A method for supplying gaseous substances into a container filled with a liquid medium according to Claim 1, comprising at least one container (1) filled with a liquid medium, wherein the container bottom has at least two openings (2, 3) for at least temporarily receiving two lifting containers (4, 5) that are pivotally connected to a lever rod (8) that is pivotally mounted at a pivot point (9), and wherein the lifting containers (4, 5) have at least one aeration device and at least one height-adjustable ceiling element (10, 11),
wherein
a) the gas volume to be supplied is received by a lifting container (4, 5) by opening an aeration device (12, 13) outside the filled container (1), wherein the height-adjustable ceiling element (10, 11) of the lifting container (4, 5) is locked
b) the gas volume is transferred into the filled container (1) by an upstroke of the lifting container (4, 5), wherein the height-adjustable ceiling element (10, 11) of the lifting container (4, 5) is unlocked
c) the gas volume received from the lifting container (4, 5) is released in the filled container (1), wherein the height-adjustable ceiling element (10, 11) of the lifting container (4, 5) descends
d) the lifting container (4, 5) is lowered, wherein the height-adjustable ceiling element (10, 11) of the lifting container (4, 5) is raised and locked
e) the operation is performed in a reciprocating fashion by two lifting containers (4, 5) connected via a pivotally mounted lever rod (8).

## Revendications

1. Réservoir, qui est rempli d'un milieu liquide, doté d'un dispositif destiné à alimenter des substances gazeuses, au réservoir (1) étant associés au moins deux modules de levage (4, 5) et les modules de levage étant reliés l'un à l'autre par l'intermédiaire d'un système de transmission d'énergie (8, 44), les modules de levage (4, 5) comportant chacun au moins un système d'aération (12, 13, 41), destiné à absorber la substance gazeuse à partir de l'environnement de la zone inférieure du réservoir et au moins un élément de fond supérieur (10, 11, 37) déplaçable en hauteur et le fond inférieur du réservoir (1) comportant des ouvertures, pour le transfert de la substance gazeuse dans le réservoir (1),
**caractérisé**
**en ce que** les modules de levage (4, 5) sont conçus sous la forme de réservoirs de levage,
**en ce que** le réservoir (1) comporte au moins deux ouvertures (2, 3) pour la réception au moins temporaire d'au moins deux réservoirs de levage (4, 5), au moins un élément d'étanchéité (6, 7) étant placé entre le bord d'une ouverture (2, 3) et la paroi d'un réservoir de levage (4, 5) et en ce que les ouvertures sont conçues pour réceptionner les réservoirs de levage dans le fond inférieur du réservoir.

2. Réservoir selon la revendication 1, **caractérisé en ce que** les substances gazeuses qui doivent être alimentées sont renfermées dans des corps comportant des cavités, notamment des sphères.

3. Procédé, destiné à alimenter des substances gazeuses dans un réservoir selon la revendication 1, rempli de milieu liquide, comportant au moins un réservoir (1) rempli d'un milieu liquide, le fond inférieur du réservoir comportant au moins deux ouvertures (2, 3) pour la réception au moins temporaire de deux réservoirs de levage (4, 5) qui sont reliés de manière rotative avec une tige de levier (8) logée de manière rotative sur un point de rotation (9) et les réservoirs de levage (4, 5) comportant au moins un système d'aération et au moins un élément de fond supérieur (10, 11) déplaçable en hauteur,
a) le volume gazeux qui devant être alimenté est absorbé par un réservoir de levage (4, 5) par ouverture d'un système d'aération (12, 13) à l'extérieur du réservoir (1), l'élément de fond supérieur (10, 11) déplaçable en hauteur du réservoir de levage (4, 5) étant bloqué
b) le volume gazeux étant transféré par une course de levée du réservoir de levage (4, 5) dans le réservoir (1) rempli, l'élément de fond supérieur (10, 11) déplaçable en hauteur du réservoir de levage (4, 5) étant débloqué
c) le volume gazeux absorbé par le réservoir de levage (4, 5) étant libéré dans le réservoir (1) rempli, l'élément de fond supérieur (10, 11) déplaçable en hauteur du réservoir de levage (4, 5) étant abaissé,
d) le réservoir de levage (4, 5) étant abaissé, l'élément de fond supérieur (10, 11) réglable en hauteur du réservoir de levage (4, 5) étant relevé et bloqué,
e) le processus étant réalisé réciproquement par deux réservoirs de levage (4, 5) reliés par l'intermédiaire d'une tige de levier (8) logée de manière rotative
